(19) Europäisches Patentamt
European Patent Office
Office européen des brevets

(11) Veröffentlichungsnummer: **0 375 878 A2**

(12) # EUROPÄISCHE PATENTANMELDUNG

(21) Anmeldenummer: **89119900.2**

(51) Int. Cl.5: **H04N 7/22**

(22) Anmeldetag: **26.10.89**

(30) Priorität: **29.12.88 DE 3844182**

(43) Veröffentlichungstag der Anmeldung: **04.07.90 Patentblatt 90/27**

(84) Benannte Vertragsstaaten: **AT DE FR GB IT NL SE**

(71) Anmelder: **ROBERT BOSCH GMBH**
**Postfach 10 60 50**
**D-7000 Stuttgart 10(DE)**

(72) Erfinder: **Afsar, Erdal, Dipl.-Ing.**
**Am Schülerheim 15**
**D-1000 Berlin 33(DE)**
Erfinder: **Hüllen, Thomas, Dipl.-Ing.**
**Viktoria-Luise-Platz 6**
**D-1000 Berlin 30(DE)**
Erfinder: **Wandel, Peter, Dipl.-Ing.**
**Alboinstrasse 37**
**D-1000 Berlin 42(DE)**

(74) Vertreter: **Schmidt, Hans-Ekhardt, Dipl.-Ing.**
**Robert Bosch GmbH Geschäftsbereich Mobile Kommunikation Patent- und Lizenzabteilung Forckenbeckstrasse 9-13**
**D-1000 Berlin 33(DE)**

(54) **Analoges optisches Übertragungssystem.**

(57) Der Erfindung liegt die Aufgabe zugrunde, ein bekanntes analoges optisches Übertragungssystem derart weiterzubilden, daß eine Vielzahl von Fernsehkanälen in der Original-Frequenzlage übertragen werden kann, ohne daß es zu störenden Verzerrungen der übertragenen Signale kommt.

Die Lösung der Aufgabe besteht darin, daß das HF-Signalspektrum einer sendeseitigen Frequenzweiche (11) zugeführt wird, die mehrere Teilbereichsfilter (12, 13) umfaßt. An jedem Ausgang der Filter steht ein Teilbereich des HF-Signalspektrums zur Verfügung. Jeder Teilbereich umfaßt mehrere Fernsehkanäle. An die Filter schließen sich je eine optische Sendeeinrichtung (23, 24), an diese je eine Lichtwellenleiterstrecke (30, 31) und daran je eine optische Empfangseinrichtung (35, 36) an. Die optischen Empfangseinrichtungen sind mit je einem Teilbereichsfilter (40, 41) einer empfangsseitigen Frequenzweiche (45) verbunden. Am Ausgang (46) der empfangsseitigen Frequenzweiche liegt das HF-Signalspektrum.

Die Zeichnung zeigt ein Blockschaltbild des analogen optischen Übertragungssystems.

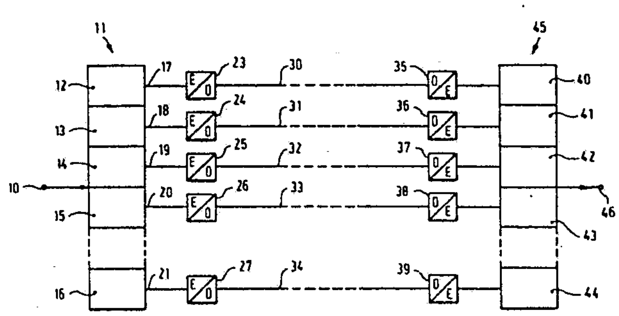

EP 0 375 878 A2

# Analoges optisches Übertragungssystem

Die Erfindung geht von einem Übertragungssystem nach dem Oberbegriff des Anspruchs 1 aus.

## Stand der Technik

Es sind derartige Übertragungssysteme bekannt, mit denen eine gewisse Zahl von Fernsehkanälen in analoger Form über eine Lichtwellenleiterstrecke übertragen werden kann. Hierbei werden über einen Lichtwellenleiter gerade soviel Kanäle in einem bestimmten Frequenzband übertragen, daß die Störabstände den Forderungen entsprechen. Sollen mehr Kanäle übertragen werden, so benutzt man in der Regel das gleiche Frequenzband, in das die Nutzkanäle umgesetzt werden, und setzt einen weiteren Lichtwellenleiter ein. Sollen jedoch beispielsweise mehr als dreißig Fernsehkanäle in ihrer Original-Frequenzlage übertragen werden, um die kanalweise Umsetzung zu vermeiden, dann reicht die Linearität der Kennlinie der in einem optischen Sender eingesetzten Laserdiode nicht mehr aus, um eine hochwertige Übertragung zu gewährleisten.

## Aufgabe

Der Erfindung liegt die Aufgabe zugrunde, eine Vorrichtung nach dem Oberbegriff des Anspruchs 1 derart weiterzubilden, daß eine analoge optische Übertragung einer Vielzahl von Fernsehkanälen in ihren Originalfrequenzen, wie sie in einer Breitbandkommunikations-Anlage vorgefunden werden, möglich ist, ohne daß es zu unzulässigen Signalverzerrungen kommt.

## Lösung

Diese Aufgabe wird bei einer Vorrichtung nach dem Oberbegriff des Anspruchs 1 durch die im kennzeichnenden Teil dieses Anspruchs angegebenen Merkmale gelöst. Die mit der Erfindung erzielbaren Vorteile bestehen insbesondere darin, daß durch die teilbereichsweise Übertragung des HF-Signalspektrums die heute verfügbaren Laserdioden eingesetzt werden können, ohne daß es zu störenden Verzerrungen der Signale kommt. Unterstützt wird diese Wirkung durch die für jeden Teilbereich vorgesehenen Filter, die dafür sorgen, daß die durch die Signale eines Teilbereiches entstehenden Störprodukte, welche in einen Nachbarteilbereich fallen, in diesem ausgesiebt werden. Als Teilbereichsfilter werden vorzugsweise Oktavfilter vorgesehen. Weitere Vorteile der Erfindung bestehen darin, daß der technische Aufwand für die analoge optische Übertragung in der Original-Frequenzlage geringer ist als für andere analoge oder digitale Übertragungen, bei denen die Signale umgesetzt und/oder de- und remoduliert werden müssen.

## Beschreibung eines Ausführungsbeispiels der Erfindung

Ein Ausführungsbeispiel der Erfindung ist in der Zeichnung an Hand eines Blockschaltbildes dargestellt und wird im folgenden näher erläutert.

Die Figur zeigt ein Blockschaltbild eines analogen optischen Übertragungssystems für ein eine Vielzahl von Fernsehkanälen umfassendes HF-Signalspektrum. In der Figur bezeichnet 10 einen Eingang einer sendeseitigen Frequenzweiche 11. Die Frequenzweiche besteht aus mehreren Teilbereichsfiltern 12 bis 16, mit deren Ausgängen 17 bis 21 je eine optische Sendeeinrichtung 23 bis 27 verbunden ist. An die optischen Sendeeinrichtungen schließt sich je eine Lichtwellenleiterstrecke 30 bis 34 an, an deren Ende je eine optische Empfangseinrichtung 35 bis 39 vorgesehen ist. Jede optische Empfangseinrichtung steht mit je einem Eingang von den sendeseitigen Teilbereichsfiltern entsprechenden empfangsseitigen Teilbereichsfiltern 40 bis 44 in Verbindung. Die Teilbereichsfilter bilden eine empfangsseitige Frequenzweiche 45, deren Ausgang mit 46 bezeichnet ist.

Die Wirkungsweise des vorstehend beschriebenen Übertragungssystems ist folgende.

An dem Eingang 10 liegt ein HF-Signalspektrum aus einer Vielzahl von Fernsehkanälen, das können zum Beispiel 35 Kanäle einer Breitbandkommunikations-Anlage sein. Die Filter 17 bis 21 der sendeseitigen Frequenzweiche 11 sind so beschaffen, daß sie das Signalspektrum in eine der Zahl der Filter entsprechende Zahl von Teilbereichen aufteilen. Jeder Teilbereich umfaßt mehrere Fernsehkanäle. Bei einem Filter liegen die kleinste und die größte Frequenz des Teilbereiches so weit auseinander, daß die am meisten störenden Intermodulationsprodukte außerhalb des Übertragungsbereiches dieses Filters entstehen. Bei der bevorzugten Version eines Oktavfilters verhalten sich die kleinste und größte Frequenz wie 1 : 2.

Die Signale eines jeden Teilbereiches liegen an den Ausgängen 17 bis 21 der sendeseitigen Frequenzweiche 11 und werden je einer der optischen Sendeeinrichtungen 23 bis 27 zugeführt, die mittels je einer Laserdiode die elektrischen Signale in optische Signale umwandeln. Die optischen Signale gelangen über die Lichtwellenleiterstrecken 30 bis 34 an die optischen Empfangseinrichtungen 35 bis 39, in denen die optisch übertragenen Signale in elektrische Signale zurückgewandelt werden. Die elektrischen Signale werden mittels der Teilbereichsfilter 40 bis 44 der empfangsseitigen Frequenzweiche 45 zusammengefaßt, so daß an deren Ausgang 46 das gesamte HF-Signalspektrum wieder vorhanden ist.

Die Teilbereichsfilter 17 bis 21 und 40 bis 44 bewirken, daß die am meisten störenden Intermodulationsprodukte, das sind Störprodukte zweiter Ordnung, am Ausgang 46 nicht mehr erscheinen, weil diese Störprodukte jeweils in den benachbarten Teilbereich fallen und durch das entsprechende Filter für den benachbarten Teilbereich ausgefiltert werden. In der Figur ist noch durch gestrichelte Linien angedeutet, daß die Frequenzweichen 11 und 45 mehr als je fünf Teilbereichsfilter 17 bis 21 bzw. 40 bis 44 umfassen können.

## Ansprüche

1. Analoges optisches Übertragungssystem für ein mehrere Fernsehkanäle umfassendes HF-Signalspektrum mit einer optischen Sendeeinrichtung, die die elektrischen Signale des Signalspektrums mittels Laserdioden in optische Signale umwandelt, mit einer mit der optischen Sendeeinrichtung verbundenen Lichtwellenleiterstrecke und einer mit dieser verbundenen optischen Empfangseinrichtung, die die optischen Signale in elektrische Signale zurückwandelt, **dadurch gekennzeichnet,** daß eine sendeseitige Frequenzweiche (11) vorgesehen ist, die das HF-Signalspektrum ohne vorherige kanalweise Bearbeitung, wie Umsetzung und/oder De- und Remodulation, mittels je eines Filters (12) in Teilbereiche aufteilt, von denen jeder mehrere Fernsehkanäle umfaßt, daß jedem Teilbereich eine optische Sendeeinrichtung (23, 24) zugeordnet ist, daß jede optische Sendeeinrichtung über je eine Lichtwellenleiterstrecke (30, 31) mit je einer optischen Empfangseinrichtung (35, 36) verbunden ist und daß die optischen Empfangseinrichtungen mit je einem Eingang einer empfangsseitigen Frequenzweiche (45) verbunden sind, die mittels gleichartiger Filter die übertragenen Teilbereiche wieder zu dem HF-Signalspektrum zusammenfaßt.

2. Übertragungssystem nach Anspruch 1, dadurch gekennzeichnet, daß die Teilbereichsfilter (12, 40) der Frequenzweichen (11, 45) als Oktavfilter ausgebildet sind und daß sie das HF-Frequenzspektrum in entsprechende Oktavbänder aufteilen bzw. wieder zusammenfügen.

42/88

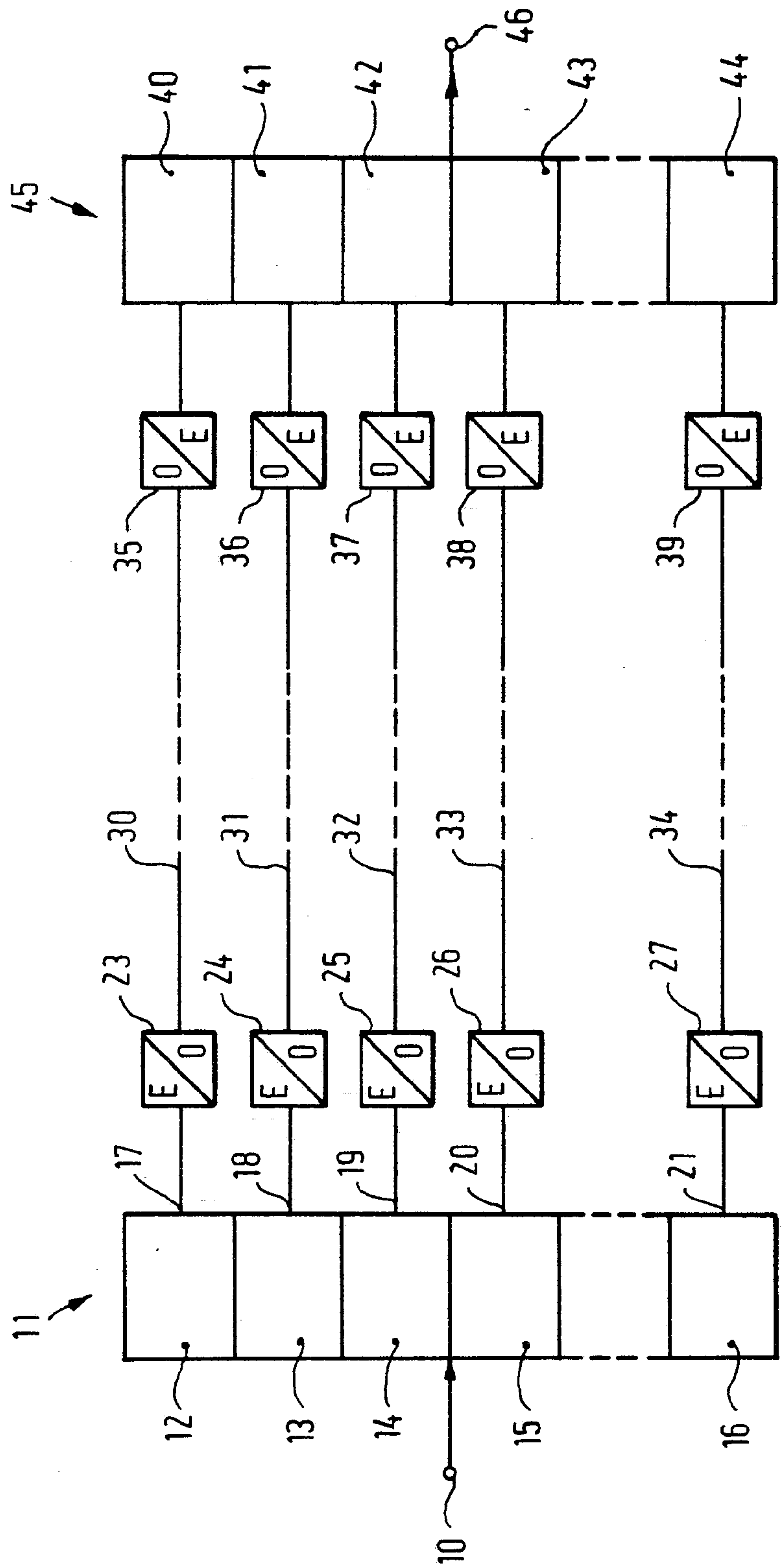
10
11
12
13
14
15
16
17
18
19
20
21
23
24
25
26
27
30
31
32
33
34
35
36
37
38
39
40
41
42
43
44
45
46
E
O